# EUROPÄISCHE PATENTANMELDUNG

(11) **EP 3 560 580 A1**
(43) Veröffentlichungstag der Anmeldung: **30.10.2019**
(21) Anmeldenummer: 19163330.4
(22) Anmeldetag: 18.03.2019
(51) Int. Cl.: B01F 5/06, C08L 95/00, C10C 3/00, E01C 19/10

(54) **ANLAGE UND VERFAHREN ZUM HERSTELLEN VON BITUMENGEMISCH**

(30) Priorität: 17.04.2018 DE 102018205817
(71) Anmelder: Benninghoven GmbH & Co. KG, 54516 Wittlich (DE)
(72) Erfinder: Völker, Alfons, 54558 Gillenfeld (DE); Wagner, Frank, 54492 Zeltingen-Rachtig (DE)
(74) Vertreter: Rau, Schneck & Hübner Patentanwälte Rechtsanwälte PartGmbB

(57) **Zusammenfassung**

Eine Anlage zum Herstellen von Bitumengemisch umfasst eine statische Mischkammer (1) zum Erzeugen eines Bitumengemischs sowie eine Bitumen-Zuführlinie (2) zum Zuführen von Bitumen in die Mischkammer (1) mittels einer Bitumen-Zugabedüse (3) und mindestens einer Material-Zuführlinie (4) zum Zuführen von Material in die Mischkammer (1). Es resultiert eine Anlage zum Herstellen von Bitumen, bei dem es möglich ist, die Eigenschaften in Abhängigkeit von der Anwendung abzustimmen.

## Beschreibung

Die vorliegende Patentanmeldung nimmt die Priorität der deutschen Patentanmeldung DE 10 2018 205 817.2 in Anspruch, deren Inhalt durch Bezugnahme hierin aufgenommen wird.

Die Erfindung betrifft eine Anlage und ein Verfahren zum Herstellen von Bitumengemisch.

Verfahren und Anlagen zum Herstellen von Bitumengemisch mit unterschiedlichen Eigenschaften, insbesondere zum Herstellen von modifiziertem Bitumen beziehungsweise von Schaumbitumen, sind allgemein bekannt. Die Herstellung der einzelnen Bitumenarten erfolgt dabei, je nach den gewünschten Eigenschaften des Bitumens, in getrennten Anlagen mittels Rührwerken. Derartige Anlagen sind in der Anschaffung sowie im Betrieb kostenintensiv und weisen aufgrund der eingesetzten Rührwerke einen hohen Wartungsaufwand auf. Zusätzlich sind bei der Verwendung von Rührwerken ebenfalls der Transport sowie die Lagerung des Bitumens sehr kostenintensiv und erfordern einen hohen Energieaufwand.

Die DE 601 03 985 T2 offenbart ein Verfahren sowie ein System zur Herstellung einer Warmmischgut-Schaum-Asphaltzusammensetzung.

Die DE 195 46 515 A1 offenbart ein Verfahren für die Bildung von Emulsionen von viskosem Kohlenwasserstoff in wässriger Pufferlösung.

Es ist daher eine Aufgabe der vorliegenden Erfindung, den bekannten Stand der Technik derart zu verbessern, dass eine Anlage effizienter betrieben werden kann und gleichzeitig die Herstellung von Bitumengemisch vereinfacht wird. Eine weitere Aufgabe der Erfindung ist es eine Anlage bereitzustellen, bei der es möglich ist, die Eigenschaften des Bitumengemischs in Abhängigkeit von der Anwendung abzustimmen.

Diese Aufgabe wird gelöst durch eine Anlage gemäß den Merkmalen des Anspruchs 1.

Im Gegensatz zu den aus dem Stand der Technik bekannten Anlagen weist die erfindungsgemäße Anlage eine statische Mischkammer zum Erzeugen eines Bitumengemischs auf. Erfindungsgemäß wurde erkannt, dass zur Herstellung eines entsprechenden Bitumengemischs keine Rührwerke notwendig sind. Aufgrund des Ersetzens des Rührwerks durch eine Mischkammer, welche als statischer Mischer ausgeführt ist, entfällt die Notwendigkeit, die Lagertemperatur des zugeführten Bitumens zu erhöhen. Hierdurch wird eine Reduzierung der Produktionskosten des Bitumengemischs sowie gleichzeitig des Energieverbrauchs ermöglicht. Daneben wird der Wartungsaufwand erheblich reduziert.

Die zusätzlich zur Bitumen-Zuführlinie vorgesehene mindestens eine Material-Zuführlinie dient zum Zuführen von Material in die Mischkammer. Mittels des zugeführten Materials können die Eigenschaften des Bitumens je nach Anwendungsart geändert werden. Eine Veränderung der Eigenschaften des Bitumens findet direkt, das heißt ohne Zeitverzögerung, während des Mischprozesses innerhalb der Mischkammer statt.

Der Bitumen sowie das zusätzliche Material werden der Mischkammer vorteilhafterweise gleichzeitig zugeführt. Es ist ebenfalls denkbar, den Bitumen sowie das Material nicht zeitgleich, d.h. abwechselnd, der Mischkammer zuzuführen.

Mittels der erfindungsgemäßen Anlage ist es insbesondere möglich, Bitumengemische mit unterschiedlichen Eigenschaften chargenweise herzustellen. Die Eigenschaften des Bitumens ändern sich je nach Menge und Art des zugegebenen Materials. Hierdurch wird lediglich die Menge an Bitumen hergestellt, welche benötigt wird. Eine Überproduktion von Bitumengemisch wird folglich vermieden.

Vorteilhafterweise wird die als statischer Mischer ausgeführte Mischkammer im Gleichstrom betrieben. Insbesondere erfolgt der in der statischen Mischkammer stattfindende Mischprozess in einem Schritt. Vorteilhafterweise wird das Bitumengemisch erst nach dem Austritt aus der statischen Mischkammer aufgeschäumt.

Das der Mischkammer zugeführte Bitumen kann insbesondere kontinuierlich, vorteilhafterweise diskontinuierlich zugegeben werden. Ebenfalls können die zusätzlich zugeführten Materialien ebenfalls kontinuierlich oder diskontinuierlich zugegeben werden.

Vorteilhafterweise wird der statischen Mischkammer ein bestimmtes Bitumen als Bindemittel zugeführt, wobei das bestimmte Bitumen ein hartes Bitumen und/oder ein weiches Bitumen sein kann. Hartes Bitumen weist insbesondere eine Durchdringung von 100 dmm oder weniger, insbesondere von 70 dmm, vorteilhafterweise von 50 dmm, auf. Weiches Bitumen weist insbesondere eine Durchdringung von 100 dmm oder höher, insbesondere 150 dmm, vorteilhafterweise 200 dmm, auf.

Eine Anlage gemäß Anspruch 2 ermöglicht die Zugabe von Fluiden in die Mischkammer. Das Fluid wird dabei von einer Fluidversorgung über die Fluid-Zuführlinie mittels der Fluid-Zugabedüse in die Mischkammer geführt. Die Fluidversorgung kann hierbei als Fluidspeicher, in welchem eine begrenzte Menge an Fluid gespeichert werden kann, ausgeführt sein. Es ist ebenfalls denkbar, dass die Fluidversorgung ein herkömmlicher Wasseranschluss für Brauchwasser ist.

Das Fluid ist insbesondere Wasser. Allerdings sind ebenfalls weitere Fluide denkbar, welche beim Vermischen mit Bitumen dessen Eigenschaften verändern. Insbesondere dient das der Mischkammer zugeführte Wasser zur Herstellung von Schaumbitumen.

Vorteilhafterweise sind im Fluid zusätzliche Schaumstabilisatoren enthalten. Dabei können die Schaumstabilisatoren dem Fluid vor der Zugabe in die Mischkammer zugeführt werden. Vorteilhafterweise werden die Schaumstabilisatoren dem Fluid innerhalb des Fluidspeichers zugeführt, allerdings ist ebenfalls denkbar, dass bereits ein mit Schaumstabilisatoren versetztes Fluid dem Fluidspeicher zugegeben wird.

Insbesondere sind die Fluid-Zugabedüse sowie die Bitumen-Zugabedüse an der gleichen Stirnseite der Mischkammer angebracht. Vorteilhafterweise liegen die genannten Düsen nebeneinander. Hierdurch wird eine gute Vermischung des Bitumens mit dem Fluid ermöglicht.

Eine Anlage gemäß Anspruch 3 ermöglicht die Zugabe von mindestens einem Additiv in die Mischkammer. Unter Additiven werden insbesondere Materialien verstanden, welche ebenfalls Einfluss auf die Eigenschaften des Bitumens haben. Hierunter fallen insbesondere Polymere, Emulgatoren, Dispersionen, Flüssig-Wachse, Flüssig-Gummi, Suspensionen, Säuren und Laugen.

Insbesondere ist die Additiv-Zugabedüse an der gleichen Stirnseite der Mischkammer angebracht, an der die weiteren Zugabedüsen liegen. Vorteilhafterweise liegt die Additiv-Zugabedüse neben der Bitumen-Zugabedüse. Hierdurch wird eine gute Vermischung des Bitumens mit dem mindestens einen Additiv ermöglicht.

Vorteilhafterweise ist das der Mischkammer zugeführte mindestens eine Additiv kein Fluid, insbesondere kein Wasser. Wasser in diesem Sinne ist herkömmliches Leitungswasser, destilliertes Wasser, demineralisiertes Wasser und/oder deionisiertes Wasser.

Der mindestens eine Vorratsbehälter zur Lagerung des mindestens einen Additivs ermöglicht es, die Anlage variabel einzusetzen. Durch entsprechende Vorratsbehälter können eine Mehrzahl unterschiedlicher Additive innerhalb der Anlage gleichzeitig vorgehalten werden. Jeder Vorratsbehälter ist dabei genau einem Additiv zugeordnet. Hierdurch wird ein Höchstmaß an Flexibilität erreicht. Für jede einzelne Charge eines Bitumengemischs können die jeweiligen Additive hinzu- bzw. abgeschalten und somit der Mischkammer gezielt zugeführt werden. Es resultiert die Möglichkeit der chargenweisen Änderung der zugegebenen Additive zu dem Bitumen.

Eine Anlage gemäß Anspruch 4 ermöglicht eine dosierte Zugabe des Bitumens in die Mischkammer. Es ist ebenfalls denkbar, dass die mindestens eine Material-Zuführlinie ebenfalls eine entsprechende Zählereinheit aufweist. Hierdurch können der Mischkammer neben dem Bitumen ebenfalls definierte Mengen an Materialien zugeführt werden.

Eine Anlage gemäß Anspruch 5 ermöglicht eine gute Vermischung des Bitumens mit dem mindestens einen Additiv und dem Fluid.

Eine Anlage gemäß Anspruch 6 ermöglicht eine besonders gute Vermischung des Bitumengemischs innerhalb der Mischkammer. Das Ventil ist insbesondere als Druckhalteventil ausgeführt. Vorteilhafterweise weist die Mischkammer eine Druckluftzufuhr auf, welche die Mischkammer über das Ventil mit Druckluft versorgt. Insbesondere liegt der Druck innerhalb der Kammer zwischen 2 und 5 bar, vorteilhafterweise bei 3,5 bar.

Eine Anlage gemäß Anspruch 7 ermöglicht eine geregelte Bitumen- bzw. Materialzufuhr in die Mischkammer. Mittels der Pumpen können innerhalb der einzelnen Zuführlinien unterschiedliche Strömungsgeschwindigkeiten bei der Zugabe der einzelnen Materialien bzw. des Bitumens realisiert werden. Dies hat den Vorteil, dass die zugegebenen Materialien mit dem Bitumen besonders gut vermischt werden. Insbesondere werden durch den durch die Pumpe realisierten Druck beim Zuführen des Bitumens bzw. des Materials Verwirbelungen an der jeweiligen Zugabedüse innerhalb der Mischkammer erzeugt. Vorteilhafterweise wird ein zugeführtes Fluid mit dem Bitumen bei Druck durch partielles Verdampfen vermischt.

Eine Anlage gemäß Anspruch 8 ermöglicht ein Homogenisieren des Bitumengemischs. Die Strömungsbrecher können dabei innerhalb der Mischkammer unterschiedlich angeordnet sein. Vorteilhafterweise teilen die Strömungsbrecher den Bitumengemischstrom innerhalb der Mischkammer und führen diesen anschließend wieder zusammen.

Eine Anlage gemäß Anspruch 9 ermöglicht eine dosierte Zugabe von Bitumen in die Bitumen-Zuführlinie.

Der Erfindung liegt weiterhin die Erfindung zugrunde, ein Verfahren zu schaffen, dass in einfacher Weise die Herstellung von Bitumengemisch ermöglicht und gleichzeitig effizient ist. Eine weitere Aufgabe der Erfindung ist es ein Verfahren bereitzustellen, bei dem es möglich ist, die Eigenschaften des Bitumengemischs in Abhängigkeit von der Anwendung abzustimmen.

Diese Aufgabe wird durch ein Verfahren mit Merkmalen des Anspruchs 10 gelöst. Die Vorteile des erfindungsgemäßen Verfahrens entsprechen den bereits beschriebenen Vorteilen der Anlage zum Herstellen von Bitumengemisch. Die bereits beschriebenen Vorteile führen dazu, dass das erfindungsgemäße Verfahren zum Herstellen von Bitumengemisch einfach und energieeffizient ist.

Das Verfahren kann den zusätzlichen Schritt umfassen, dass die mindestens eine Material-Zuführlinie als Fluid-Zuführlinie, über welche Fluid mittels einer Fluid-Zugabedüse in die Mischkammer zugeführt wird, ausgeführt ist. Des Weiteren kann die Material-Zuführlinie gleichzeitig als Additiv-Zuführlinie ausgeführt sein, über welche mindestens ein Additiv mittels einer Additiv-Zugabedüse in die Mischkammer zugeführt wird.

Des Weiteren kann das Verfahren den Schritt umfassen, wonach der Anteil des Fluids an dem Bitumengemisch zwischen 2 % und 4 % liegt und/oder das Fluid zusätzlich Schaumstabilisierer aufweist und/oder der Anteil des mindestens einen Additivs an dem Bitumengemisch bei 25% liegt.

Gemäß einem weiteren möglichen Verfahrensschritt ist das Bitumengemisch von der Mischkammer mittels einer Eindüsvorrichtung einem Asphalt-Mischer zuführbar. Durch die Eindüsvorrichtung wir die Viskosität des dem Asphalt-Mischer zugeführten Bitumengemischs herabgesetzt und die Benetzung des darin enthaltenen Steingemischs verbessert, wodurch eine Temperaturabsenkung des Asphalts auf ca. 100 °C ermöglicht wird. Hierdurch wird zum einen Brennstoff gespart und zum anderen gleichzeitig der CO₂-Ausstoß reduziert. Insbesondere kann das Verfahren zu Herstellung von Heißasphalt bei einer Temperatur von mindestens 160 °C verwendet werden. Vorteilhafterweise kann das Verfahren ebenfalls zur Herstellung von Warmasphalt bei einer Temperatur von 100 °C bis 130 °C verwendet werden.

Des Weiteren kann das Verfahren den Schritt umfassen, wonach die Mischkammer im Gleichstrom betrieben wird.

Des Weiteren kann das Verfahren den Schritt umfassen, wonach das der Mischkammer zugeführte Bitumen kontinuierlich oder diskontinuierlich zugegeben wird.

Weitere vorteilhafte Ausgestaltungen, zusätzliche Merkmale und Einzelheiten der Erfindung ergeben sich aus der nachfolgenden Beschreibung eines Ausführungsbeispiels. Es zeigen:

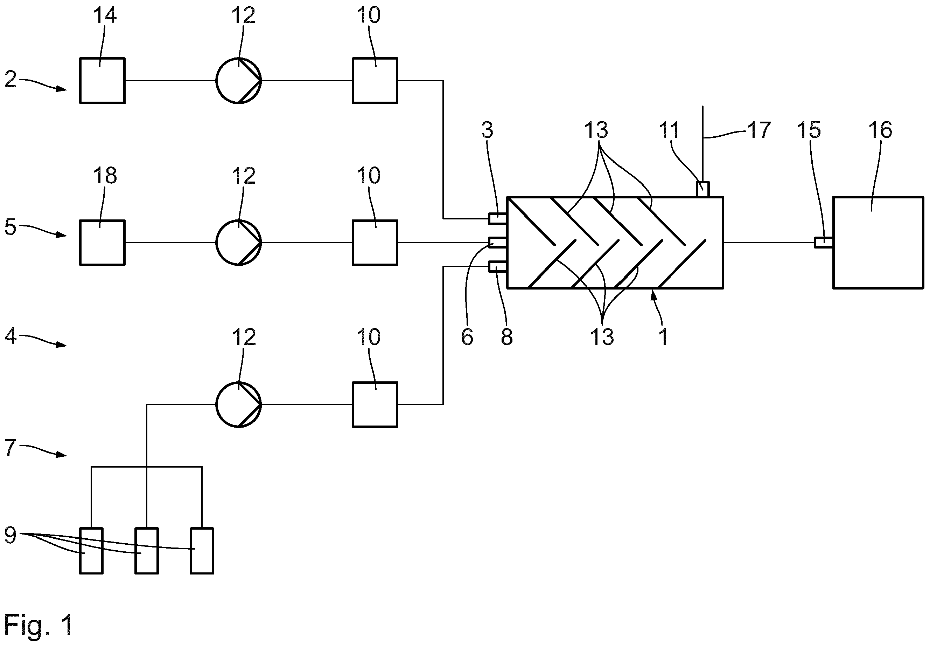

- Fig. 1: eine schematische Darstellung einer Anlage zum Herstellen von Bitumengemisch gemäß der Erfindung.

Eine in Fig. 1 dargestellte Anlage dient zur Herstellung von Bitumengemisch. Die Anlage umfasst eine statische Mischkammer 1, welche zum Erzeugen eines Bitumengemischs dient. Zusätzlich weist die Anlage eine Bitumen-Zuführlinie 2 auf, über welche mittels einer Bitumen-Zugabedüse 3 Bitumen von der Bitumen-Zuführlinie 2 in die Mischkammer 1 zugeführt wird.

Des Weiteren umfasst die Anlage zwei Material-Zuführlinien 4, wobei eine der Material-Zuführlinien 4 als Fluid-Zuführlinie 5 ausgeführt ist, während die zweite Material-Zuführlinie 4 als Additiv-Zuführlinie 7 ausgeführt ist. Die Fluid-Zuführlinie 5 dient dabei zum Zuführen von Wasser in die Mischkammer 1 mittels einer Fluid-Zugabedüse 6. Mittels einer Additiv-Zugabedüse 8 wird mindestens ein Additiv von der Additiv-Zuführlinie 7 in die Mischkammer 1 zugeführt.

Das über die Fluid-Zuführlinie 5 zugeführte Wasser wird von einer Fluidversorgung 18 bereitgestellt. In dem dargestellten Ausführungsbeispiel ist die Fluidversorgung 18 ein Wassertank. Die Additiv-Zuführlinie 7 weist drei Vorratsbehälter 9 auf. Die Vorratsbehälter 9 dienen zum Bevorraten von unterschiedlichen Additiven, welche über die Additiv-Zuführlinie 7 der Mischkammer 1 zugeführt werden. Gemäß dem dargestellten Ausführungsbeispiel ist es über die Additiv-Zuführlinie 7 möglich, dass verschiedene Additive gleichzeitig der Mischkammer 1 zugeführt werden. Die Bitumen-Zuführlinie 2 weist eine Bitumen-Waage 14 auf, welche als Bitumenversorgung der Bitumen-Zuführlinie 2 dient und ein dosiertes Zugeben von Bitumen an die Bitumen-Zuführlinie 2 ermöglicht. Alle drei genannten Zuführlinien 2, 5 und 7 weisen zudem jeweils eine Pumpe 12 sowie eine Zählereinheit 10 auf. Die Pumpen 12 dienen dabei zum Erzeugen eines Fluidstroms von den genannten Zuführeinheiten hin zu den jeweiligen Zugabedüsen 3, 6 und 8. Die Zählereinheiten 10 ermöglichen eine dosierte Zugabe des Bitumens bzw. der Materialien in die Mischkammer 1. Die Mischkammer 1 ist als statische Mischkammer ausgeführt und wird im Gleichstromverfahren betrieben. Die jeweiligen Materialien werden über die Zugabedüsen 3, 6, 8 von den Zuführlinien 2, 5, 7 der Mischkammer 1 stirnseitig zugeführt und an der gegenüberliegenden Stirnseite wieder abgeführt. Das Bitumen sowie die zusätzlich zugeführten Materialien können dabei kontinuierlich oder diskontinuierlich zugeführt werden. Das in der Mischkammer 1 erzeugte Bitumengemisch wird anschließend über eine Eindüsvorrichtung 15 einem Asphalt-Mischer 16 zugeführt und dort mit weiteren Bestandteilen von Asphalt vermischt. Entsprechende Zuführlinien der weiteren Asphaltbestandteile sind aus Gründen der Übersichtlichkeit nicht dargestellt.

Zum homogenen Durchmischen der zugeführten Materialien weist die Mischkammer 1 eine Mehrzahl von Strömungsbrechern 13 auf, welche ein Vermischen der Materialien zu einem Bitumengemisch bewirken. Durch die Anordnung der Strömungsbrecher 13 sowie durch unterschiedliche Strömungsgeschwindigkeiten der zugeführten Materialien erfolgt eine intensive Durchmischung des Bitumengemischs. Des Weiteren erfolgt durch die Strömungsbrecher 13 eine Verwirbelung der zugeführten Materialien, während durch unterschiedliche Zuführgeschwindigkeiten des Bitumens, des mindestens einen Additivs und des Fluids mittels der Zugabedüsen gleichzeitig ein Durchmischen des Bitumengemischs durch partielles Verdampfen erfolgt.

An der Stirnseite, an welcher die Materialien der Mischkammer 1 zugeführt werden, sind die Zugabedüsen 3, 6, 8 nebeneinander angeordnet. Durch die nebeneinander liegende Positionierung treten alle Materialien nahezu gleichzeitig in die Mischkammer ein und werden bereits von Beginn an in der Mischkammer 1 miteinander vermischt. Vorteilhafterweise liegt die Bitumen-Zugabedüse 3 zwischen der Additiv-Zugabedüse 8 und der Fluid-Zugabedüse 6.

Die Mischkammer 1 ist über ein Ventil 11 mit Druck beaufschlagbar. Hierzu ist das Ventil 11 mit einer Druckluftzufuhr 17 verbunden. Üblicherweise liegt der Überdruck in der Mischkammer bei 3,5 bar.

Die Anlage kann grundsätzlich in drei verschiedenen Betriebsweisen betrieben werden.

In einer ersten Betriebsweise werden der Mischkammer 1 ausschließlich Bitumen über die Bitumen-Zuführlinie 2 sowie Wasser über die Fluid-Zuführleitung 5 zugeführt. Hierdurch kann insbesondere Schaumbitumen hergestellt werden.

In einer zweiten Betriebsweise wird der Mischkammer 1 ausschließlich Bitumen über die Bitumen-Zuführlinie 2 sowie mindestens ein Additiv über die Additiv-Zuführlinie 7 zugeführt. Hierdurch wird in der Mischkammer ein modifiziertes Bitumengemisch erzeugt.

Eine dritte Betriebsweise besteht darin, dass neben Bitumen, welche über die Bitumen-Zuführlinie 2 der Mischkammer 1 zugeführt wird, beide weiteren Zuführlinien, das heißt die Additiv-Zuführlinie 7 sowie die Fluid-Zuführlinie 5 aktiv sind. In dieser Betriebsweise wird in der Mischkammer 1 ein modifiziertes Schaumbitumengemisch erzeugt.

Ein wesentlicher Vorteil der erfindungsgemäßen Anlage besteht darin, dass die Möglichkeit besteht, neben dem Bitumen gleichzeitig eine Vielzahl unterschiedlicher Materialien, wie ein Fluid und/oder Additive, der Mischkammer 1 zuzuführen und diese in der Mischkammer 1 zu vermischen.

Nachfolgend wird ein Verfahren zur Herstellung von Bitumengemisch gemäß der dritten Betriebsweise erläutert. Über die Bitumen-Zugabedüse 3 wird Bitumen von der Bitumen-Waage 14 über die Bitumen-Zuführlinie 2 der Mischkammer 1 zugeführt. Mittels der Fluid-Zuführlinie 5 wird Wasser aus der Fluidversorgung 18 über die Fluid-Zugabedüse 6 der Mischkammer 1 zugeführt. Gleichzeitig wird über die Additiv-Zuführlinie 7 mindestens ein Additiv mittels der Additiv-Zugabedüse der Mischkammer 1 zugeführt, wobei das mindestens eine Additiv dabei dem jeweiligen Vorratsbehälter 9 entnommen wird. Das der Mischkammer 1 zugeführte Wasser sowie das mindestens eine Additiv weisen gegenüber dem zugeführten Bitumen eine erhöhte Strömungsgeschwindigkeit auf. Insbesondere ist die Strömungsgeschwindigkeit des zugeführten Wassers derart hoch, dass das Wasser bei der Zugabe über die Fluid-Zugabedüse 6 verdampft, wodurch eine besonders gute Vermischung der einzelnen Materialien zu dem Bitumengemisch erfolgt. Gleichzeitig wird durch die Strömungsbrecher 13 innerhalb der Mischkammer 1 aus den zugeführten Materialien ein Bitumengemisch erzeugt. Hierzu ist die Mischkammer 1 über ein Druckhalteventil 11 mit Druck beaufschlagt. Der Druck innerhalb der Mischkammer 1 beträgt 3,5 bar. Das Bitumengemisch wird anschließend an der den Zugabedüsen 3, 6 und 8 gegenüber liegenden Stirnseite aus der Mischkammer 1 geführt und über eine Eindüsvorrichtung 15 einem Asphalt-Mischer 16 zugeführt.

## Patentansprüche

1. Anlage zum Herstellen von Bitumengemisch mit
- einer statischen Mischkammer (1) zum Erzeugen eines Bitumengemischs,
- einer Bitumen-Zuführlinie (2) zum Zuführen von Bitumen in die Mischkammer (1) mittels einer Bitumen-Zugabedüse (3) und
- mindestens einer Material-Zuführlinie (4) zum Zuführen von Material in die Mischkammer (1).

2. Anlage gemäß Anspruch 1, **dadurch gekennzeichnet, dass** die mindestens eine Material-Zuführlinie (4) als Fluid-Zuführlinie (5) zum Zuführen eines Fluids in die Mischkammer (1) mittels einer Fluid-Zugabedüse (6) ausgeführt ist.

3. Anlage gemäß Anspruch 1 oder 2, **dadurch gekennzeichnet, dass** die mindestens eine Material-Zuführlinie (4) als Additiv-Zuführlinie (7) zum Zuführen von mindestens einem Additiv in die Mischkammer (1) mittels einer Additiv-Zugabedüse (8) ausgeführt ist, insbesondere wobei die Additiv-Zuführlinie (7) mindestens einen Vorratsbehälter (9) zur Lagerung des mindestens einen Additivs aufweist.

4. Anlage gemäß einem der Ansprüche 1 bis 3, **dadurch gekennzeichnet, dass** die Bitumen-Zugabedüse (3) eine Zählereinheit (10) zur dosierten Zugabe aufweist.

5. Anlage gemäß einem der Ansprüche 3 oder 4, **dadurch gekennzeichnet, dass** die Additiv-Zugabedüse (8) und die Fluid-Zugabedüse (6) in der Mischkammer (1) nebeneinander angeordnet sind.

6. Anlage gemäß einem der Ansprüche 1 bis 5, **dadurch gekennzeichnet, dass** die Mischkammer (1) über ein Ventil (11) mit Druck beaufschlagbar ist.

7. Anlage gemäß einem der Ansprüche 1 bis 6, **dadurch gekennzeichnet, dass** die Zuführlinien (2, 4, 5, 7) jeweils mindestens eine Pumpe (12) aufweisen.

8. Anlage gemäß einem der Ansprüche 1 bis 7, **dadurch gekennzeichnet, dass** die Mischkammer (1) Strömungsbrecher (13) zum Homogenisieren des Bitumengemischs aufweist.

9. Anlage gemäß einem der Ansprüche 1 bis 8, **dadurch gekennzeichnet, dass** die Bitumen-Zuführlinie (2) eine Bitumen-Waage (14) aufweist.

10. Verfahren zum Herstellen von Bitumengemisch umfassend die Verfahrensschritte
- Zuführen von Bitumen von einer Bitumen-Zuführlinie (2) mittels einer Bitumen-Zugabedüse (3) in eine statische Mischkammer (1),
- Zuführen von Material von mindestens einer Material-Zuführlinie (4) in die Mischkammer (1),
- Mischen des Bitumens und des Materials in der Mischkammer (1) zu einem Bitumengemisch.

11. Verfahren gemäß Anspruch 10, **dadurch gekennzeichnet, dass** die mindestens eine Material-Zuführlinie (4) als Fluid-Zuführlinie (5), über welche ein Fluid mittels einer Fluid-Zugabedüse (6) in die Mischkammer (1) zugeführt wird, und/oder als Additiv-Zuführlinie (7) ausgeführt ist, über welche mindestens ein Additiv mittels einer Additiv-Zugabedüse (8) in die Mischkammer (1) zugeführt wird.

12. Verfahren gemäß Anspruch 11, **dadurch gekennzeichnet, dass** der Anteil des Fluids an dem Bitumengemisch zwischen 2 % und 4 % liegt und/oder das Fluid zusätzlich Schaumstabilisierer aufweist und/oder der Anteil des mindestens einen Additivs an dem Bitumengemisch bei 25% liegt.

13. Verfahren gemäß einem der Ansprüche 10 bis 12, **dadurch gekennzeichnet, dass** das Bitumengemisch von der Mischkammer (1) mittels einer Eindüsvorrichtung (15) einem Asphalt-Mischer (16) zugeführt wird.

14. Verfahren gemäß einem der Ansprüche 10 bis 13, **dadurch gekennzeichnet, dass** die Mischkammer (1) im Gleichstrom betrieben wird.

15. Verfahren gemäß einem der Ansprüche 10 bis 14, **dadurch gekennzeichnet, dass** der der Mischkammer (1) zugeführte Bitumen kontinuierlich oder diskontinuierlich zugegeben wird.
